Europäisches Patentamt

European Patent Office

Office européen des brevets

(11) Veröffentlichungsnummer: **0 461 516 A1**

(12) **EUROPÄISCHE PATENTANMELDUNG**

(21) Anmeldenummer: **91109072.8**

(22) Anmeldetag: **04.06.91**

(51) Int. Cl.5: **B60R 13/04**

(30) Priorität: **09.06.90 DE 9006548 U**

(43) Veröffentlichungstag der Anmeldung:
**18.12.91 Patentblatt 91/51**

(84) Benannte Vertragsstaaten:
**DE ES FR GB IT**

(71) Anmelder: **REHAU AG + Co**
**Rheniumhaus**
**W-8673 Rehau(DE)**

(72) Erfinder: **Der Erfinder hat auf seine Nennung verzichtet**

(54) **Zier-, Stoss- oder Einfassleiste für Fahrzeuge.**

(57) Die Erfindung betrifft eine Zier- oder Stoßleiste für Fahrzeuge, insbesondere für Kraftfahrzeuge. Die Leiste kann alternativ einen längsverlaufend durchgehenden Hohlraum mit an der Anlageseite zur Befestigungsunterlage eingebrachten Durchgriffsausnehmungen oder einen C-förmigen Querschnitt mit an der Anlageseite längsverlaufend durchgehender Schlitzöffnung Jeweils für den Einsatz von Befestigungselementen aufweisen. Ferner ist die Leiste an ihren Stirnflächen durch nachträglich angebrachte Endkappen abgeschlossen. Diese Endkappen entsprechen in ihrem Anschlußbereich dem Leistenquerschnitt und sind mit einem zungenförmigen Halteteil in den Hohlraum bzw. in die Schlitzöffnung der Leiste eingesetzt. Die Erfindung wird darin gesehen, daß aus der Fläche des zungenförmigen Halteteils (3) in der Nähe der Endkappe durch radial und axial verlaufende Einschnitte eine Rastfeder (32) gebildet ist. Diese Rastfeder (32) ist endkappenseitig einstükkig mit dem Halteteil (3) verbunden und besitzt an der freigeschnittenen Schmalseite eine zur Befestigungsunterlage gerichtete Rasterhebung (321). Diese Rasterhebung (321) hintergreift im Einsatzzustand den Rand einer Ausnehmung (25) der Leiste (2). Das zungenförmige Halteteil (3) ist mit seinem von der Endkappe (31) abgewandten freien Ende als Verschiebesicherung gegenüber dem zugeordneten Befestigungselement (4) ausgebildet.

Die Neuerung betrifft eine Zier-, Stoß- oder Einfaßleiste für Fahrzeuge, insbesondere für Kraftfahrzeuge, wobei die Leiste entweder einen längsverlaufend durchgehenden Hohlraum mit an der Anlageseite zur Befestigungsunterlage eingebrachten Durchgriffsausnehmungen oder einen C-förmigen Querschnitt mit an der Anlageseite längsverlaufend durchgehender Schlitzöffnung jeweils für den Einsatz von Befestigungselementen aufweist, und wobei die Leiste an ihren Stirnflächen durch nachträglich angebrachte Endkappen, die in ihrem Abschlußbereich dem Leistenquerschnitt entsprechen und mit einem zungenförmigen Halteteil in den Hohlraum bzw die Schlitzöffnung eingesetzt sind, abgeschlossen ist.

Aus der DE-OS 1 930 493 ist eine Profilschiene mit Endstück bekannt, bei der das Endstück an der Verbindungsstelle eine dem Profil der Schiene entsprechende Kontur besitzt. Das Endstück ist dabei als Kappe ausgebildet, die über das Ende der Profilschiene übergreift und durch Befestigungsmittel an der Profilschiene gehalten wird. Die Befestigungsmittel der Kappe greifen in entsprechende Ausnehmungen, die in der Profilschiene vorgesehen sind, halternd ein.

Die Profilschiene selbst weist einen C-förmigen Querschnitt mit an der Anlageseite längsverlaufend durchgehender Schlitzöffnung für den Einsatz von Befestigungselementen auf. Diese Befestigungselemente sind in der Regel in die Schlitzöffnung einsetzbare Befestigungsclipse, welche die Begrenzungswände der Schlitzöffnung hintergreifen und in dem Schlitz verschieblich gelagert sind. Der Nachteil dieses Leistenaufbaus wird in der arbeitsaufwendigen Montage gesehen. Die Befestigungsclipse liegen nach dem Aufbringen der Endkappe frei verschieblich in der Schlitzöffnung der in der Anlageseite zur Befestigungsunterlage angebrachten Schlitzöffnung.

Die Befestigungsclipse müssen genau über die Rastausnehmungen in der Befestigungsunterlage geschoben werden und danach müssen die einzelnen Clipse in diese Befestigungsöffnungen eingedrückt werden. Schon bei der geringsten Verschiebung während des Handlings ergeben sich Verbindungsschwierigkeiten, die ein öfteres Nachrichten der Befestigungsclipse erforderlich machen können.

Aus der DE-OS 23 30 202 ist ein Endstück aus Kunststoff für eine Stoß- oder Scheuerleiste bekannt, wobei die Leiste einen C-förmigen Querschnitt aufweist. Das Endstück wird mit einem Befestigungsteil in den Hohlraum der Leiste eingeschoben, während der sichtbare Endbereich den äußeren Konturen der Leiste angepaßt und mit dieser bündig ist. Der eingeschobene Befestigungsteil des Endstücks ist T-förmig ausgebildet, wobei zwei Kanten der T-Form an den Enden und eine Kante in der Mitte des C-förmigen Querschnitts der Profilleiste unter Vorspannung anliegen.

Auch bei dieser Endkappenbefestigung liegen die Befestigungsclipse frei beweglich in dem zur Befestigungsunterlage gerichteten C-förmigen Aufnahmeraum. Außerdem ist bei dem angegebenen Aufbau nachteilig, daß die Befestigung des Endstücks ausschließlich auf der Vorspannung des T-förmig ausgebildeten, in den lichten Leistenquerschnitt eingeschobenen Befestigungsteils beruht. In Waschanlagen oder bei ähnlichen Beanspruchungen kann dieses lediglich verklemmte Endstück leicht aus seinem Sitz entfernt werden.

Aus der DE-OS 28 04 022 ist schließlich eine Halterung für eine Zierleiste mit einem im wesentlichen C-förmigen Querschnittsprofil an einem plattenförmigen Träger, z.B. einer Fahrzeugkarosserie, beschrieben.

Hierzu ist ein Einsatz an einem Ende der Leiste festgelegt, der in einer Vertiefung den endseitigen Halteclips trägt. Der Einsatz kann in den C-förmigen Querschnitt der Leiste eingeklebt und auf diese Weise unverrückbar festgelegt sein. Auf diese Weise läßt sich der erste Halteclips sicher in einem vorgegebenen Abstand vom freien Ende der Leiste festlegen. Eine Endkappe ist in dieser Vorveröffentlichung allerdings nicht vorgesehen, so daß diese zusätzlich am freien Ende der Leiste befestigt werden muß.

Hier setzt die Neuerung ein, die es sich zur Aufgabe gestellt hat, ein kombiniertes Endkappen- und Einsatzstück zu schaffen, mit dem sowohl die Endkappe als auch der erste Befestigungsclip beim Einsatz in den Aufnahmeraum der Profilleiste unverrückbar festgelegt werden kann. Neuerungsgemäß wird dazu vorgeschlagen, daß aus der Fläche des zungenförmigen Halteteils endkappennah durch einen kürzeren radial und zwei längere axial verlaufende Einschnitte eine Rastfeder gebildet ist, welche endkappenseitig einstückig mit dem Halteteil verbunden bleibt und in der freigeschnittenen Schmalseite eine zur Befestigungsunterlage gerichtete Rasterhebung aufweist, welche im Einsatzzustand den Rand einer zur Befestigungsunterlage gerichteten Öffnung der Leiste halternd hintergreift, und daß das zungenförmige Halteteil mit seinem von der Endkappe abgewandten freien Ende als Verschiebesicherung gegenüber dem zugeordneten Befestigungselement ausgebildet ist.

Hierbei wird als besonderer Vorteil gegenüber dem Stand der Technik der Ablauf des Montagevorgangs gesehen. In einer ersten Ausbildung wird das endkappenseitig letzte Befestigungselement dabei zunächst in die Verschiebesicherung im zungenförmigen Halteteil eingesetzt.

Diese Verschiebesicherung kann beispielsweise ein Durchbruch sein, in den ein plattenförmiger Fuß des Befestigungselementes z.B. paßgenau eingesetzt werden kann. Danach wird das Befestigungselement mit dem zungenförmigen Halteteil in den C-förmigen Querschnitt der Profilleiste mit ihrer längsverlaufend durchgehenden Schlitzöffnung so weit eingeschoben, bis die an der freigeschnittenen Schmalseite zur Befestigungsunterlage gerichtete Rasterhebung den Rand der zur Befestigungsunterlage gerichteten Öffnung der Leiste halternd hintergreift. In diesem Zustand liegt aufgrund der besonderen Formgestaltung die Stirnseite der Endkappe fest an der zugeordneten Stirnfläche der Profilleiste an. Das Befestigungselement ist in diesem Endsitz fest und unverrückbar gehaltert. Durch diesen Montagevorgang wird also sowohl die Endkappe als auch das erste Befestigungselement in bzw. an der Profilleiste in ihrem Endsitz festgelegt.

In einer weiteren Ausbildung der Neuerung liegt das endkappenferne freie Ende des zungenförmigen Halteteils in der Endstellung zwischen Endkappe und Leiste verschiebesicher am Schaft eines von der Befestigungsunterlage über eine zugeordnete Öffnung in den Hohlraum der Leiste ragenden Befestigungselementes an. Diese Befestigungsart wird dann gewählt, wenn die Befestigungselemente als Festpunkte von der Befestigungsunterlage aufragen. In diesem Fall sind die Befestigungselemente vorteilhaft T-förmig gestaltet und greifen in eine zugeordnete Öffnung der Profilleiste ein, wobei diese Öffnung eine Schlüssellochform aufweist. Mit dem Einrasten der Rasterhebung an der freigeschnittenen Schmalseite der Rastfeder im zungenförmigen Halteteil in die Öffnung der Leiste wird gleichzeitig das Ende des zungenförmigen Halteteils am Schaft des von der Befestigungsunterlage abragenden Befestigungselementes verklemmt und somit wird die Leiste auf dem Befestigungselement festgelegt.

Aus Montagegründen ist es zweckmäßig, daß in diesem Fall die größere Durchgangsöffnung der schlüssellochförmigen Öffnung in der Leiste zum Leistenende hin gerichtet ist. Auf diese Weise kann mit dem Einschieben des zungenförmigen Halteteils in die stirnseitige Öffnung der Leiste bis zum Einrasten der Rasterhebung in die Leistenöffnung eine Verschiebung des Schaftes des Befestigungselementes aus der größeren Durchgangsöffnung in die kleinere Halteöffnung und somit ein endgültiges Festlegen der Leiste an der Befestigungsunterlage mit dem Einrastvorgang erfolgen. Beim letztgenannten Festlegungsvorgang der Leiste auf der Befestigungsunterlage sind zunächst die Köpfe der Befestigungselemente über die gesamte Länge der Leiste in die größeren Durchgangsöffnungen der schlüssellochförmigen Öffnungen einzusetzen. Danach wird der zungenförmige Halteteil in die stirnseitige Öffnung der Leiste eingeführt und so weit nach vorne gedrückt, bis er mit dem Schaft des

endseitigen Befestigungselements in Berührung tritt. Bei einer weiteren Verschiebung der Endkappe bzw. des daran angeformten zungenförmigen Halteteils in Schieberichtung werden die Schäfte der Befestigungselemente von der größeren Durchgangsöffnung in den Haltebereich so weit verschoben, bis der Einrastvorgang der Rasterhebung am zungenförmigen Halteteil in die Öffnung der Leiste erfolgt. Danach ist der Festlegungsvorgang abgeschlossen.

In der Zeichnung sind Ausführungsbeispiele der neuerungsgemäßen Zier- und Stoßleiste schematisch dargestellt; es zeigen:

Fig. 1 einen Längsschnitt durch den an der Befestigungsunterlage festgelegten Teil des Leistenendes.

Fig. 2 einen Querschnitt durch die Darstellung nach Fig. 1 längs der Linie A-A.

Fig. 3 die Darstellung der Montage einer Clipsverbindung gemäß Fig. 1 und 2 als Explosionszeichnung.

Fig. 4 die Darstellung gemäß Fig. 1 mit von der Befestigungsunterlage aufragenden Befestigungselementen.

Fig. 5 einen Querschnitt durch die leiste der Fig. 4 längs der Linie B-B.

Fig. 6 die Darstellung der Montage einer Leistenverbindung nach Fig. 4 und 5 in einer Explosionszeichnung.

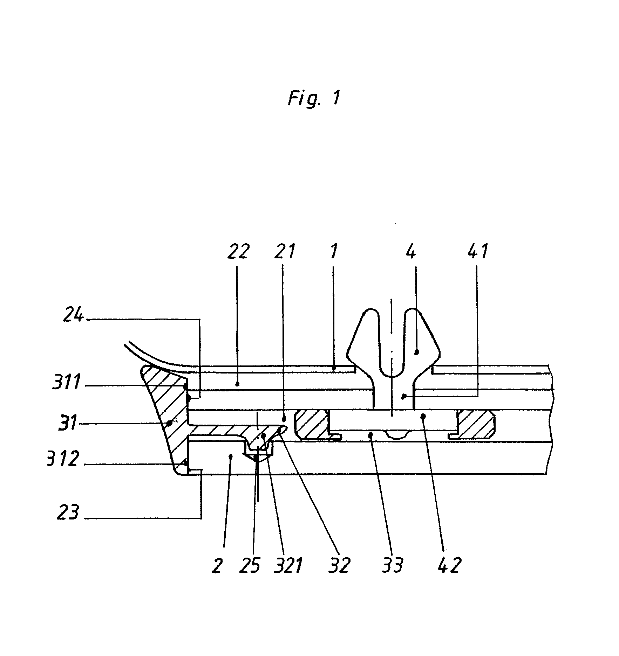

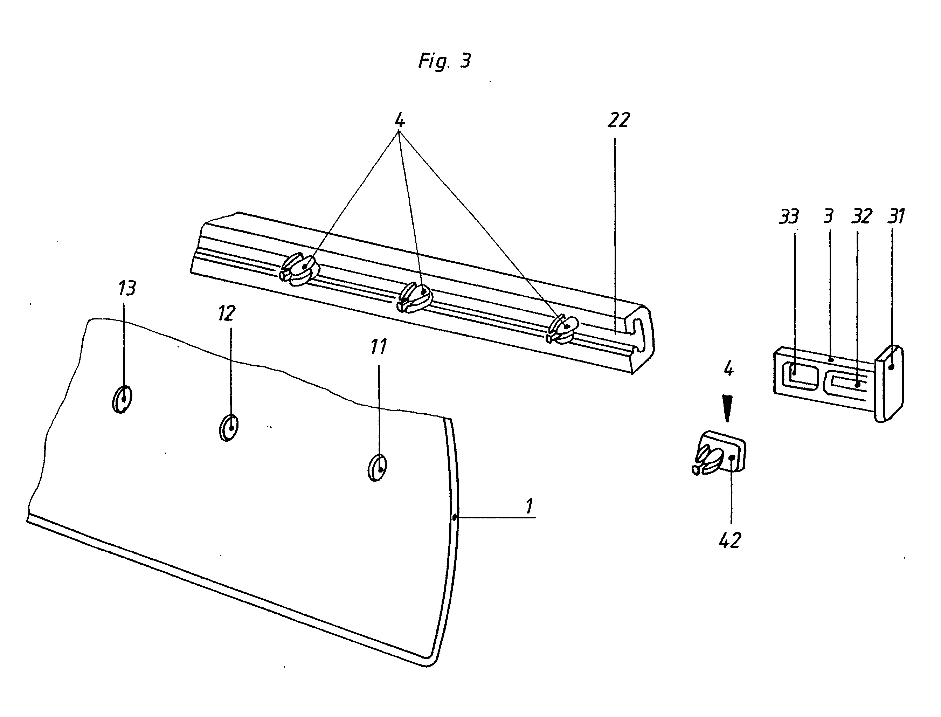

Der in Fig. 1 dargestellte Längsschnitt zeigt den Endbereich des an der Befestigungsunterlage 1 festgelegten Teils der Leiste 2. Die Leiste 2 besitzt einen Führungskanal 21 zur Aufnahme des zungenförmigen Halteteils 3 (Fig. 3) sowie eine Schlitzöffnung 22 zur Aufnahme des Schaftes 41 des Befestigungselementes 4. An das zungenförmige Halteteil 3 ist die Endkappe 31 derart angeformt, daß deren innenliegende Begrenzungsflächen 311, 312 im Verrasterungszustand fest an den Stirnflächen 23, 24 der Leiste 2 anliegen. Mit der Endkappe 31 einstückig verbunden ist die Rastfeder 32, welche an ihrem freien Ende die Rasterhebung 321 aufweist. Die Rasterhebung 321 ist in der gezeigten Darstellung in die Ausnehmung 25 der Leiste 2 eingesetzt und bildet mit dieser eine Rastverbindung.

Das Befestigungselement 4 ist mit seiner Basis 42 in die Aufnahmeöffnung 33 am zungenförmigen Halteteil 3 eingesetzt (Fig. 3).

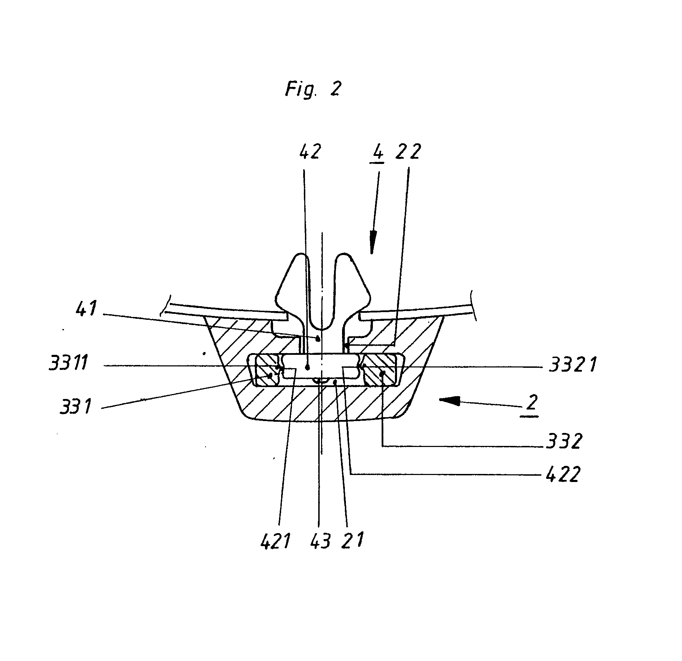

Das Einsetzen der Basis 42 des Befestigungselementes 4 in die Aufnahmeöffnung 33 am zungenförmigen Halteteil 3 kann im Wege des Einrastens erfolgen. Eine solche Rastmöglichkeit ist in Fig. 2 gezeigt. Gleiche Teile haben in dieser Zeichnung gleiche Bezugzeichen erhalten wie in Fig. 1. Aus den Begrenzungswänden 331, 332 der Aufnahmeöffnung 33 für die Bais 42 des Befestigungselementes 4 sind Rastauswölbungen 3311, 3321 ausgeformt, welche im Einbauzustand in Rastvertiefungen 421, 422 der Basis 42 des Befestigungselementes 4 rastend eingreifen. Die Basis 42 liegt über einen Abstandhalter 43 am Boden des Führungskanals 21 auf.

In Fig. 3 ist die Darstellung der Montage einer Leistenverbindung nach Fig. 1 und 2 in einer Explosionszeichnung gezeigt. Gleiche Elemente haben auch hier gleiche Bezugsziffern erhalten. Das zungenförmige Halteteil 3 zeigt die Halteausnehmung 33 für das Befestigungselement 4 sowie die Rastfeder 32, beide axial hintereinander unter räumlicher Trennung im zungenförmigen Halteteil 3 angeordnet. Am äußeren freien Ende des zungenförmigen Halteteils 3 ist die Endkappe 31 einstückig angeformt.

Zur Montage wird zunächst die Basis 42 des Befestigungselementes 4 in die Aufnahmeöffnung 33 am zungenförmigen Halteteil 3 eingesetzt, z.B. eingerastet. Danach wird der zungenförmige Halteteil 3 in den Aufnahmeraum 21 der Leiste 2 eingesetzt und dabei so weit verschoben, bis die Rastfeder 32 die Ausnehmung 25 (Fig. 1) rastend hintergreift. Während dieses Einschubvorgangs wird der Schaft 41 des Befestigungselementes 4 in der Schlitzöffnung 22 bis zu seiner Endstellung, d.h. bis zum Einrasten der Rastfeder 32 in die Ausnehmung 25 verschoben.

Mit diesem Rastvorgang sitzt das Befestigungselement 4 in dem vorgegebenen Abstand vom freien Ende der Leiste 2 fest. Die weiteren Befestigungselemente 4 werden danach in die entsprechenden Abstände der Befestigungslöcher 11, 12, 13 der Befestigungsunterlage 1 geschoben und in diese Befestigungslöcher eingeclipst. Danach ist der Verrasterungsvorgang beendet. Die Leiste 2 ist nur noch gegen Überwindung des Verrasterungsdruckes der Befestigungselemente 4 von der Befestigungsunterlage 1 zu lösen.

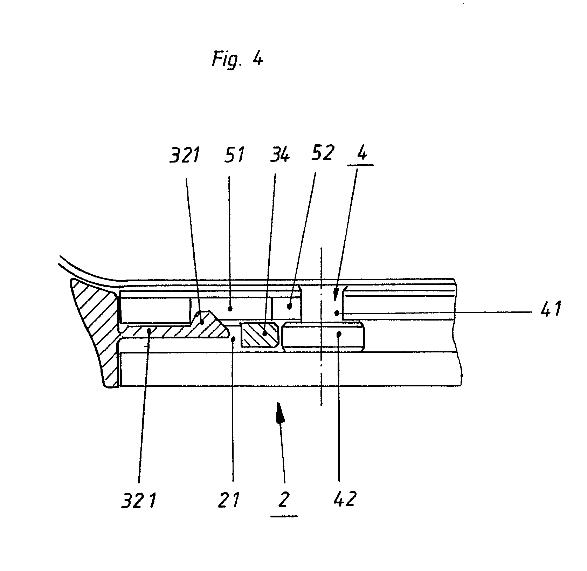

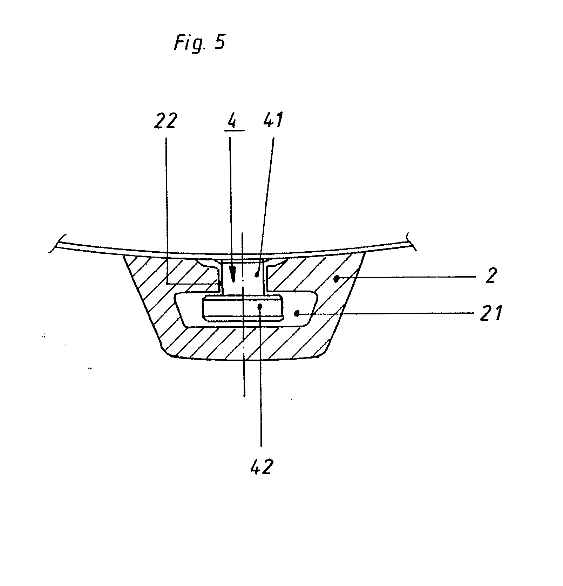

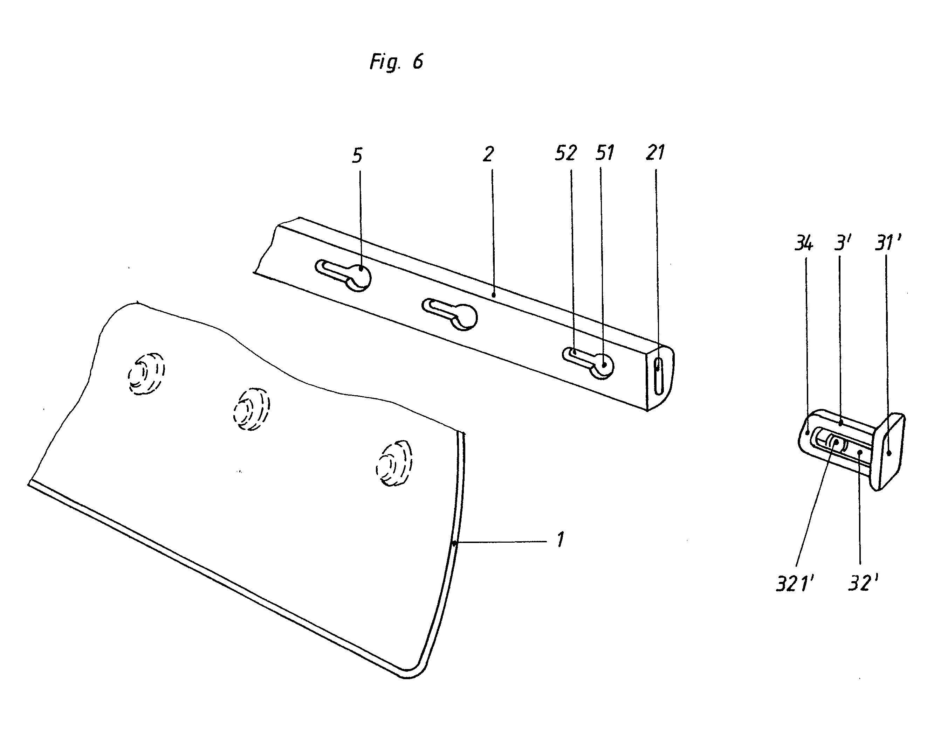

Die in den Fig. 4 bis 6 gezeigte Ausführungsform entspricht im Grundsatz der bisher geschilderten. Unterschiedlich dazu ist lediglich das nunmehr aus der Befestigungsunterlage 1 hervorstehende Befestigungselement 4 und die Tatsache, daß die Leiste 2 keine durchgehende Schlitzöffnung zur Führungsnut aufweist, sondern daß hier schlüssellochförmige Öffnungen 5 mit größeren Durchgangsöffnungen 51 und kleineren Schaftöffnungen 52 in den Leistenboden eingebracht sind (Fig.6). Beim zungenförmigen Halteteil 32 entfällt die Aufnahmeöffnung für die Basis des Befestigungselementes. Das zungenförmige Halteteil 3' besitzt weiterhin die Rastfeder 32', die mit ihrer Rasterhebung 321' um 180° versetzt zur Darstellung in Fig. 1 gezeigt ist. Der Grund liegt darin, daß die Rasterhebung 321 im Verrasterungszustand in die größere Durchgangsöffnung 51 der schlüssellochförmigen Öffnung 5 einrastet. Der Vorderbereich 34 des zungenförmigen Halteteils 32' verschiebt dabei die Leiste 2 über den Schaft 41 in die schmalere Durchgangsöffnung 52. Dabei untergreift der gleichzeitig in dem Führungskanal 21 verschobene Kopfbereich des Befestigungselementes 4 die zugeordneten Wandbereiche der Leiste 2 und legt diese damit unverrückbar auf der Oberfläche der Befestigungsunterlage 1 fest. Der gleiche Befestigungsvorgang ergibt sich über die weiteren an der Befestigungsunterlage 1 festgelegten Befestigungselemente 4.

Die Profilleiste nach der Neuerung kann auch bei Fensterschachtabdeckungen, bei Einstiegleisten, bei Scheibeneinfaßrahmen und ähnlichen Leisten verwendet werden.

**Patentansprüche**

1. Zier- oder Stoßleiste für Fahrzeuge, insbesondere für Kraftfahrzeuge, wobei die Leiste entweder eine längsverlaufend durchgehenden Hohlraum mit an der Anlageseite zur Befestigungsunterlage eingebrachten Durchgriffsausnehmungen oder einen C-förmigen Querschnitt mit an der Anlageseite längsverlaufend durchgehender Schlitzöffnung jeweils für den Einsatz von Befestigungselementen aufweist, und wobei die Leiste an ihren Stirnflächen durch nachträglich aufgebrachte Endkappen, die in ihrem Anschlußbereich dem Leistenquerschnitt entsprechen und mit einem zungenförmigen Halteteil in den Hohlraum bzw. die Schlitzöffnung eingesetzt sind, abgeschlossen ist, dadurch gekennzeichnet, daß aus der Fläche des zungenförmigen Halteteils (3) endkappennah durch einen kürzeren radial und zwei längere axial verlaufende Einschnitte eine Rastfeder (32) gebildet ist, welche endkappenseitig einstückig mit dem Halteteil verbunden bleibt und an der freigeschnittenen Schmalseite eine zur Befestigungsunterlage gerichtete Rasterhebung (321) aufweist, welche im Einsatzzustand den Rand einer Ausnehmung (25) der Leiste (2) halternd hintergreift, und daß das zungenförmige Halteteil (3) mit seinem von der Endkappe (31) abgewandten freien Ende als Verschiebesicherung gegenüber dem zugeordneten Befestigungselement (4) ausgebildet ist.

2. Zier- oder Stoßleiste nach Anspruch 1, dadurch gekennzeichnet, daß im Bereich des endkappenfernen freien Endes des zungenförmigen Halteteils (3) eine durchgehende Aufnahmeöffnung (33) eingebracht ist, in die die Basis (42) eines beweglichen Befestigungselementes (4) allseitig unverschiebbar eingesetzt ist.

3. Zier- oder Stoßleiste nach Anspruch 1, dadurch gekennzeichnet, daß das endkappenferne freie Ende des zungenförmigen Halteteils (3) in der Endstellung zwischen Endkappe (31) und Leiste (2) verschiebesicher am Schaft (41) eines von der Befestigungsunterlage (1) über eine zugeordnete Öffnung (5) in den Hohlraum (21) der Leiste (2) ragenden Befestigungselementes (4) anliegt.

4. Zier- oder Stoßleiste nach Anspruch 4, dadurch gekennzeichnet, daß das Befestigungselement (4) T-förmig gestaltet ist und die zugeordnete Öffnung (5) in der Leiste (2) eine Schlüssellochform aufweist.

5. Zier- oder Stoßleiste nach Anspruch 5, dadurch gekennzeichnet, daß die größere Durchgangsöffnung (51) der schüssellochförmigen Öffnung (5) in der Leiste (2) zum Leistenende hin gerichtet ist.

Fig. 1

Fig. 2

4 22

42

4

3321

2

332

422

43 21

421

41

3311

331

Fig. 3

4

22

13

12

11

1

4

42

33  3  32  31

EP 0 461 516 A1

Fig. 4

Fig. 5

Fig. 6

EP 0 461 516 A1

Europäisches
Patentamt

**EUROPÄISCHER
RECHERCHENBERICHT**

Nummer der Anmeldung

**EP 91 10 9072**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-1 480 568  (A. RAYMOND) <br> * Seite 1, Zeilen 57 - 67; Figuren * * Seite 2, Zeilen 10 - 47 * <br> – – – | 1,2 | B 60 R 13/04 |
| Y | US-A-3 940 901  (ANDRE NIVET) <br> * Spalte 1, Zeilen 43 - 51; Figuren 1-3 * * Spalte 4, Zeilen 17 - 63 * <br> – – – | 1,2 | |
| A | EP-A-0 337 884  (REGIE NATIONALE DES USINES RE-NAULT) <br> * Zusammenfassung; Figur 1 * <br> – – – – – | 1,3,4 | |
| | | | **RECHERCHIERTE SACHGEBIETE (Int. Cl.5)** <br><br> B 60 R <br> F 16 B |

Der vorliegende Recherchenbericht wurde für alle Patentansprüche erstellt

| Recherchenort | Abschlußdatum der Recherche | Prüfer |
|---|---|---|
| Den Haag | 18 September 91 | AREAL CALAMA A. |